# EUROPEAN PATENT APPLICATION

(11) **EP 4 787 590 A1**
(43) Date of publication of application: **05.08.2026**
(21) Application number: 25867186.6
(22) Date of filing: 05.08.2025
(51) Int. Cl.: H01M 50/367, H01M 50/383, H01M 10/658, H01M 50/249, H01M 50/204

(54) **BATTERY PACK AND VEHICLE COMPRISING SAME**

(30) Priority: 20.12.2024 KR 20240192570
(71) Applicant: LG ENERGY SOLUTION, LTD., Seoul 07335 (KR)
(72) Inventor: Bae, Inhwan, Daejeon 34122 (KR); Kim, Seho, Daejeon 34122 (KR); Jung, Kitaek, Daejeon 34122 (KR); Lee, Dongwoo, Daejeon 34122 (KR)
(74) Representative: Plasseraud IP
(86) International application number: PCT/KR2025/011675
(87) International publication number: WO 2026/134512

(57) **Abstract**

A battery pack according to one embodiment of the present invention comprises: a plurality of battery modules; and a heat diffusion prevention unit provided between adjacent battery modules, wherein the heat diffusion prevention unit maintains a spacing between the battery modules, blocks heat transfer, and provides a discharge path such that gas generated during thermal runaway of any one of the battery modules can be discharged upward.

## Description

### [TECHNICAL FIELD]

The present invention relates to a battery pack and vehicle comprising the same.

### [BACKGROUND ART]

A semi-permanent battery that converts electrical energy into chemical energy and can be repeatedly charged and discharged is referred to as a secondary battery, to distinguish it from a primary battery that is not reusable after a single use.

Examples of secondary batteries include lithium secondary batteries, nickel-cadmium (Ni-Cd) batteries, lead-acid batteries, nickel-metal hydride (Ni-MH) batteries, zinc-air batteries, and alkaline manganese batteries. Among these, lead-acid batteries and lithium secondary batteries can be regarded as the most widely commercialized secondary batteries.

In particular, lithium secondary batteries are actively utilized as batteries for electric vehicles in recent years, owing to advantages such as high energy storage density, capability of being made lightweight and compact, excellent safety, low self-discharge rate, and a long lifespan. For reference, lithium secondary batteries are generally classified into cylindrical, prismatic, and pouch types according to their manufacturing form, and their applications extend not only to electric vehicle batteries but also to ESS batteries and other electrical devices.

At present, a single lithium secondary battery (cell) is not capable of providing sufficient output to drive an electric motor. In order to employ a secondary battery as an energy source for an electric vehicle, a battery module is configured by connecting a plurality of lithium-ion battery cells in series and/or in parallel, and a battery pack is constituted including a BMS (Battery Management System) for connecting the battery modules in series and maintaining their functions, a cooling system, a BDU (Battery Disconnection Unit), and electrical wiring cables.

Meanwhile, since secondary batteries accompany chemical reactions during charging and discharging, their performance may deteriorate when used in environments exceeding an appropriate temperature, and when the temperature rises significantly above the proper level, there exists a risk of ignition or explosion. In the case of a battery module having a structure in which these secondary batteries are intensively accommodated within a module housing, the heat generated from the secondary batteries is accumulated, thereby causing the temperature of the battery module to rise more rapidly and severely.

Moreover, a battery pack includes a plurality of battery modules, and an abnormal situation may occur in some of the battery modules or in some of the secondary batteries constituting the battery module, thereby causing heat generation. Such heat generation may continuously increase the temperature of the corresponding battery module, and when the temperature exceeds a predetermined critical temperature, surrounding battery modules may also proceed into a thermal runaway state. If such heat generation or thermal runaway is not properly controlled, the stability of the battery pack cannot be reliably ensured.

If thermal runaway or thermal propagation occurs inside the battery pack, it is advantageous, in terms of heat transfer and venting space, to direct high-temperature gases, flames, and the like toward the upper part of the battery module. However, the high-temperature gases or flames discharged to the upper side may readily move within the internal space of the battery pack, thereby causing the adverse effect of inducing thermal propagation.

### [SUMMARY OF THE INVENTION]

### [TECHNICAL PROBLEM]

An object of the present invention is to effectively control high-temperature gases, particles, and the like generated during the occurrence of thermal runaway in a battery module, and to block heat transfer to adjacent battery modules.

Another object of the present invention is to provide a structure capable of effectively blocking heat transfer while maintaining the spacing between battery modules.

Yet another object of the present invention is to provide an exhaust path capable of effectively discharging high-temperature gases generated during thermal runaway of a battery module to an upper portion inside the battery pack.

A further object of the present invention is to provide a structure capable of preventing foreign substances generated during thermal runaway from being transferred to adjacent battery modules.

However, the technical objects to be solved by the present invention are not limited to those set forth above, and other objects not expressly mentioned will be clearly understood by those skilled in the art from the following description of the invention.

### [SOLUTION TO THE PROBLEM]

A battery pack according to one embodiment of the present invention comprises: a plurality of battery modules; and a heat diffusion prevention unit provided between adjacent battery modules, wherein the heat diffusion prevention unit maintains a spacing between the battery modules, blocks heat transfer, and provides a discharge path such that gas generated during thermal runaway of any one of the battery modules can be discharged upward.

The battery pack further comprises a pack lid provided on an upper side of the heat diffusion prevention unit, wherein the discharge path is formed as a spacing between the heat diffusion prevention unit and the pack lid.

Furthermore, the heat diffusion prevention unit comprises an opening and a support, wherein a height of the opening is equal to a height of the battery module, a height of the support is greater than the height of the opening, the support blocks heat transfer, and gas is discharged through the opening.

In addition, the support is characterized in that it blocks foreign substances generated during thermal runaway of the battery module.

Moreover, the support supports the pack lid, and the separation space is characterized in that it is formed between the pack lid and the opening.

The heat diffusion prevention unit further comprises: a first frame member in contact with a side of one battery module; a second frame member in contact with a side of an adjacent battery module; and a blocking pad disposed between the first frame member and the second frame member.

Furthermore, the first frame member comprises a plurality of first horizontal frames and a plurality of first vertical frames, wherein a support portion of the first frame member is formed by arranging the first horizontal frames and the first vertical frames in a grid, and an opening of the first frame member is characterized in that it is formed by arranging the first horizontal frames to be spaced apart at a predetermined interval along the vertical direction.

In addition, the second frame member comprises a plurality of second horizontal frames and a plurality of second vertical frames, wherein a support portion of the second frame member is formed by arranging the second horizontal frames and the second vertical frames in a grid, and an opening of the second frame member is characterized in that it is formed by arranging the second horizontal frames to be spaced apart at a predetermined interval along the vertical direction.

The battery pack is further characterized in that the first frame member and the second frame member are formed of mica.

Furthermore, the blocking pad is characterized in that it is formed of silicone.

Moreover, when two or more of the heat diffusion prevention units are provided, a discharge path of one of the heat diffusion prevention units and a discharge path of another of the heat diffusion prevention units are not aligned but are offset from each other.

In addition, the opening is characterized in that it is located within a distance range set with reference to a horizontal center of the heat diffusion prevention unit.

According to another embodiment of the present invention, a battery pack comprises a plurality of battery modules; and a heat diffusion prevention unit provided between adjacent battery modules, the heat diffusion prevention unit comprising: a first frame member in contact with a side surface of one of the battery modules; a second frame member in contact with a side surface of an adjacent battery module; and a blocking pad disposed between the first frame member and the second frame member.

According to yet another embodiment of the present invention, a vehicle comprises the battery pack as described above.

### [ADVANTAGEOUS EFFECTS OF THE INVENTION]

According to the present invention, a heat diffusion prevention unit provided between battery modules comprises an opening and a support, and a structural difference between the opening and the support provides a discharge path capable of effectively exhausting high-temperature gas generated during thermal runaway of the battery module toward an upper portion inside the battery pack.

In particular, the heat diffusion prevention unit may provide a cost-effective structure that effectively blocks heat transfer between battery modules by combining a frame structure formed of mica and a blocking panel formed of silicone.

The heat diffusion prevention unit can effectively block particles generated during thermal runaway of a battery module and prevent transfer of such particles to adjacent modules.

However, the advantageous effects of the present invention are not limited to those described above, and other technical effects not explicitly mentioned will be clearly understood by those of ordinary skill in the art from the following description.

### [BRIEF DESCRIPTION OF DRAWINGS]

The accompanying drawings, which are incorporated in and constitute a part of this specification, illustrate preferred embodiments of the present invention and, together with the detailed description set forth below, serve to further clarify the technical idea of the present invention. However, the present invention should not be construed as being limited to the matters illustrated in these drawings.
FIG. 1 is a perspective view illustrating the configuration of a battery pack according to an embodiment of the present invention.
FIG. 2 is a front view illustrating the first frame member of the heat diffusion prevention unit.
FIG. 3 is a perspective view illustrating a path of high-temperature gas flow when thermal runaway occurs in a portion of a battery pack according to an embodiment of the present invention.
FIG. 4 is a front view illustrating the structure of a battery pack according to an embodiment of the present invention.
FIG. 5 is an enlarged partial view illustrating the structure of a battery pack according to an embodiment of the present invention.
FIG. 6 is a perspective view illustrating the structure of the heat diffusion prevention unit.
FIG. 7 is an exploded perspective view illustrating the configuration of the heat diffusion prevention unit.
FIG. 8 is a perspective view illustrating a vehicle comprising a battery pack according to the present invention.

### [MODES FOR CARRYING OUT THE INVENTION]

The advantages and features of the present invention, and the methods of achieving them, will become apparent with reference to the embodiments described in detail below in conjunction with the accompanying drawings. However, the present invention is not limited to the embodiments disclosed herein but may be implemented in various forms. These embodiments are provided only to ensure that the disclosure of the present invention is complete and to fully inform a person of ordinary skill in the art of the scope of the invention. The present invention is defined only by the scope of the claims. Accordingly, in some embodiments, well-known process steps, device structures, and technologies may not be described in detail to avoid obscuring the present invention. Throughout the specification, like reference numerals refer to like elements.

In the drawings, the thicknesses of layers and regions may be exaggerated to clearly show multiple layers and regions. Throughout the specification, similar parts are designated by the same reference numerals. When an element such as a layer, film, region, or plate is referred to as being "on" another element, it can be directly on the other element or intervening elements may be present. In contrast, when an element is referred to as being "directly on" another element, it is to be understood that there are no intervening elements present. Similarly, when an element is referred to as being "under" another element, it can be directly under the other element or intervening elements may be present. Conversely, when an element is referred to as being "directly under" another element, it is to be understood that there are no intervening elements present.

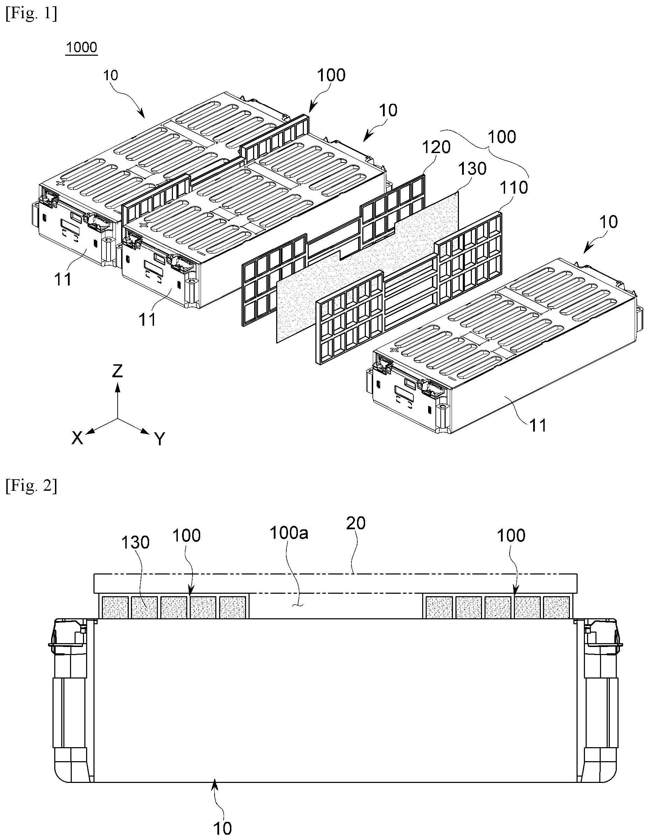

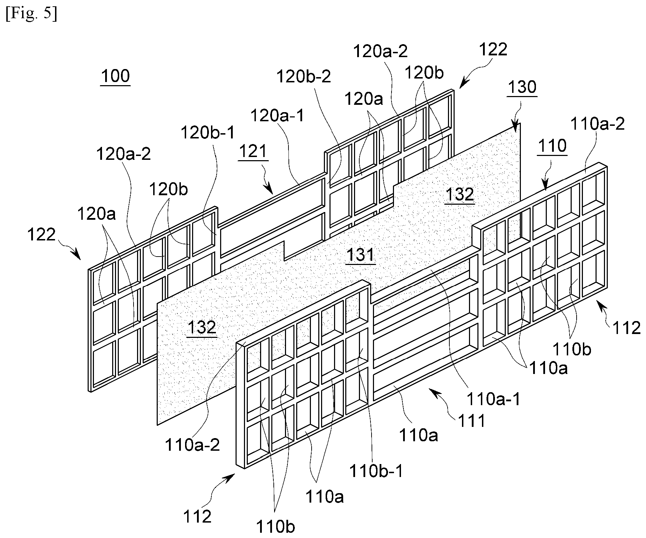

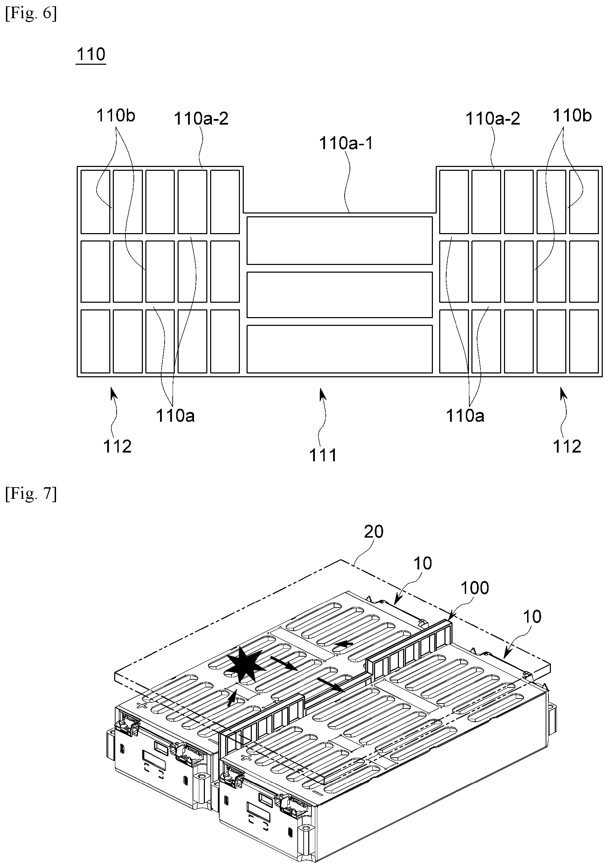

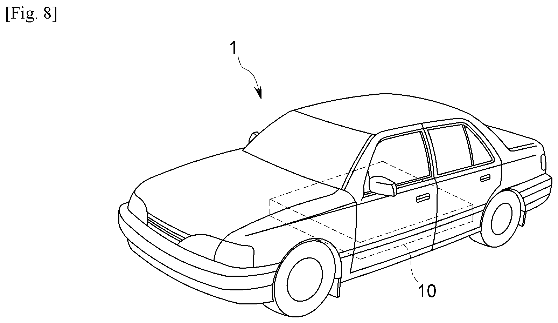

Referring to FIGS. 1 to 8, embodiments of a battery pack according to the present invention and a vehicle comprising the same will now be described.

A battery pack (1000) according to an embodiment of the present invention comprises a battery module (10) and a heat diffusion prevention unit (100). The battery module (10) may comprise a plurality of battery cells (not shown). In this embodiment, the battery cell (not shown) is exemplified as a secondary battery of the pouch type, but is not limited thereto. Therefore, the battery module (10) may be constituted by cylindrical or prismatic secondary batteries.

A secondary battery may comprise an electrode assembly, an electrolyte, and an exterior case. The electrode assembly is an assembly of electrodes and a separator, and comprises one or more positive electrode plates and one or more negative electrode plates disposed with a separator interposed therebetween.

Additionally, each electrode plate of the electrode assembly is provided with an electrode tab configured to be connected to an electrode lead. In particular, in the case of a pouch-type secondary battery, one or more electrode tabs may be connected to an electrode lead, and the electrode lead may be interposed between pouch exterior material such that one end is exposed to the outside, thereby serving as an electrode terminal. The exterior case has an internal hollow space accommodating the electrode assembly and electrolyte, and is configured in a sealed form. In the case of a can-type secondary battery, the exterior case may be formed of a metal material, and in the case of a pouch-type secondary battery, the exterior case may comprise an outer insulating layer, a metal layer, and an inner adhesive layer.

Since the configuration of such a secondary battery is apparent to those skilled in the art, a detailed description thereof will be omitted. The battery pack according to the present invention may employ various secondary batteries known at the time of filing.

The battery module (10) comprises a module housing (11) for accommodating battery cells (not shown). The module housing (11) constitutes the exterior of the battery module (10), and a plurality of battery cells (not shown) are accommodated inside the module housing (11).

The module housing (11) is formed in a rectangular parallelepiped shape. The module housing (11) is configured in a sealed form to protect the battery cells (not shown) accommodated therein from external physical and chemical factors. The module housing (11) may be provided with a rigid material such as metal to secure mechanical rigidity, and an electrically insulating material to secure electrical insulation inside and outside the battery module (10). In addition, the module housing (11) may be constituted by various other materials or may further comprise additional materials.

A heat diffusion prevention unit (100) is provided between adjacent battery modules (10).

The heat diffusion prevention unit (100) maintains a spacing between battery modules (10) and blocks heat transfer. The heat diffusion prevention unit (100) provides a discharge path such that gas generated during thermal runaway of one battery module (10) flows upward and is discharged.

A battery pack (1000) according to an embodiment of the present invention further comprises a pack lid (20). The pack lid (20) is provided on an upper side of the heat diffusion prevention unit (100), and thus, a discharge path through which the gas is discharged is formed as a separation space (100a) between the heat diffusion prevention unit (100) and the pack lid (20).

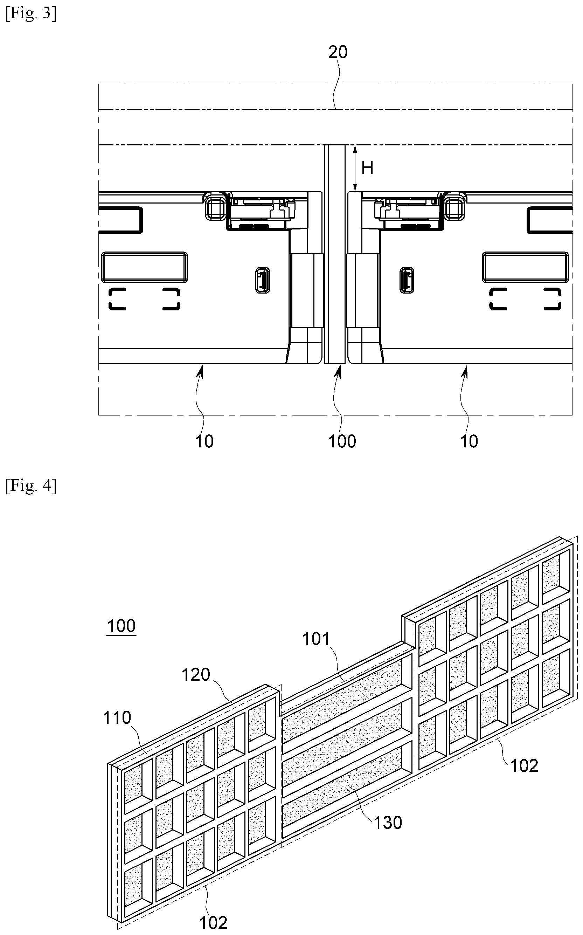

Structurally, the heat diffusion prevention unit (100) comprises an opening (101) and a support (102). The opening (101) is formed such that its height is equal to the height of the battery module (10), and the support (102) is formed such that its height is greater than the height of the battery module (10). As shown in FIG. 3, the top of the battery module (10) and the top of the support (102) have a height difference equal to a predetermined length (H). Therefore, the heat diffusion prevention unit (100) blocks heat transfer through the support (102), and the opening (101) discharges gas generated by thermal runaway of the battery module (10). Additionally, the support (102) blocks foreign substances generated during thermal runaway of the battery module (10).

As described above, the pack lid (20) is provided on an upper side of the heat diffusion prevention unit (100), and specifically, the pack lid (20) is supported by the support (102) of the heat diffusion prevention unit (100). Therefore, the separation space (100a), which constitutes a discharge path through which high-temperature gas generated by thermal runaway of the battery module (10) is discharged, is formed between the pack lid (20) and the opening (101).

Meanwhile, in this embodiment, the opening (101) is formed in a central region in the horizontal direction of the heat diffusion prevention unit (100). However, the opening (101) does not necessarily need to be formed in the horizontal central region of the heat diffusion prevention unit (100). The opening (101) may be formed so as to be positioned within a predetermined distance range with reference to a horizontal center of the heat diffusion prevention unit (100).

The heat diffusion prevention unit (100) will now be described in more detail with respect to its structural configuration.

The heat diffusion prevention unit (100) comprises a first frame member (110), a second frame member (120), and a blocking pad (130).

The first frame member (110) is in contact with a side surface of one battery module (10), and the second frame member (120) is in contact with a side surface of an adjacent battery module (10). A blocking pad (130) is provided between the first frame member (110) and the second frame member (120). The first frame member (110) and the second frame member (120) are coupled together to secure the blocking pad (130).

The coupling of the first frame member (110) and the second frame member (120) is effected by an adhesive member (not shown). For example, the adhesive member may comprise double-sided tape or an adhesive bond, but is not limited thereto.

As described above, since the heat diffusion prevention unit (100) comprises an opening (101) and a support (102), the first frame member (110) likewise comprises an opening (111) and a support (112). As shown in FIG. 4, an opening (111) is formed in a central region of the first frame member (110), and supports (112) are formed on both sides of the opening (111).

The first frame member (110) comprises a plurality of first horizontal frames (110a) and a plurality of first vertical frames (110b). The support portion (112) of the first frame member (110) is formed by arranging the plurality of first horizontal frames (110a) and the plurality of first vertical frames (110b) in a grid pattern.

As shown in the drawing, the plurality of first horizontal frames (110a) are spaced apart by a predetermined interval along the vertical direction, and the plurality of first vertical frames (110b) are spaced apart by a predetermined interval along the horizontal direction, and arranged in a grid to form the support portion (112) of the first frame member (110).

The opening (111) of the first frame member (110) is formed by the plurality of first horizontal frames (110a) being spaced apart at predetermined intervals along the vertical direction. Specifically, one side of a first horizontal frame (110a) forming the opening (111) of the first frame member (110) is connected to a first vertical frame (110b-1) forming the support (112) of the first frame member (110) on the left side, and the other side is connected to a first vertical frame (110b-2) forming the support (112) on the right side.

Among the first horizontal frames (110a) forming the opening (111), the uppermost first horizontal frame (110a-1) is positioned lower than the uppermost first horizontal frame (110a-2) among the first horizontal frames (110a) forming the support (112). Accordingly, the opening (111) of the first frame member (110) can form a separation space (100a) between itself and the pack lid (20).

The second frame member (120) comprises a plurality of second horizontal frames (120a) and a plurality of second vertical frames (120b). The support portion (122) of the second frame member (120) is formed by arranging the plurality of second horizontal frames (120a) and the plurality of second vertical frames (120b) in a grid pattern.

As shown in the drawing, the plurality of second horizontal frames (120a) are spaced apart by a predetermined interval along the vertical direction, and the plurality of second vertical frames (120b) are spaced apart by a predetermined interval along the horizontal direction, and arranged in a grid to form the support portion (122) of the second frame member (120).

The opening (121) of the second frame member (120) is formed by the plurality of second horizontal frames (120a) being spaced apart at predetermined intervals along the vertical direction. Specifically, one side of a second horizontal frame (120a) forming the opening (121) of the second frame member (120) is connected to a second vertical frame (120b-1) forming the support (122) on the left side, and the other side is connected to a second vertical frame (120b-2) forming the support (122) on the right side.

Among the second horizontal frames (120a) forming the opening (121), the uppermost second horizontal frame (120a-1) is positioned lower than the uppermost second horizontal frame (120a-2) among the second horizontal frames (120a) forming the support portion (122). Accordingly, the opening (121) of the second frame member (120) can form a separation space between itself and the pack lid (20).

The heat diffusion prevention unit (100) of the present invention maintains a separation distance from the pack lid (20) through the following structural features.

The support portions (112, 122) of the first frame member (110) and the second frame member (120) have a structure for directly supporting the pack lid (20), and in this case, they are formed at a position lower than the uppermost first horizontal frame (110a-1) and the uppermost second horizontal frame (120a-1) of the openings (111, 121). Specifically, the uppermost first horizontal frame (110a-1) forming the opening (111) of the first frame member (110) and the uppermost second horizontal frame (120a-1) forming the opening (121) of the second frame member (120) are each formed to be positioned lower, by a predetermined distance, than the uppermost first horizontal frame (110a-2) and the uppermost second horizontal frame (120a-2) forming the support portions (112, 122).

Due to these structural features, a stable separation space (100a) is formed between the pack lid (20) and the opening (101), thereby providing a discharge path through which high-temperature gas generated during thermal runaway of the battery module (10) can be smoothly released.

As described above, the first frame member (110) and the second frame member (120) are formed to have the same shape. However, the thickness of the first frame member (110) may be greater than that of the second frame member (120). Since a blocking pad (130) is provided between the first frame member (110) and the second frame member (120), the thickness of the first frame member (110) is formed greater than that of the second frame member (120) so that the blocking pad (130) can be inserted into the first frame member (110).

A blocking pad (130) is provided between the first frame member (110) and the second frame member (120). The blocking pad (130) is formed in the same shape as the first frame member (110) and the second frame member (120). Accordingly, the blocking pad (130) comprises an opening (131) and a support (132), wherein the opening (131) of the blocking pad (130) is formed at a lower position than the support (132).

The blocking pad (130) may be formed of, for example, a silicone material. Since silicone has excellent flexibility and heat resistance, it can perform its function stably during thermal runaway of the battery module (10), thereby completely blocking foreign substances and heat transfer.

In this embodiment, the first frame member (110) and the second frame member (120) may be formed of mica. Since mica has high heat resistance, it can be stably disposed inside the battery pack (1000) even if the battery module (10) undergoes thermal runaway. In addition, mica has excellent insulation properties and can provide an effect of blocking heat transfer between battery modules (10). Mica also has high mechanical strength, ensuring structural stability, and has good processability, thereby being advantageous for implementing complex shapes such as the lattice structure described above.

However, since manufacturing the heat diffusion prevention unit (100) solely from mica may present cost limitations, the first frame member (110) and the second frame member (120) may be formed of mica as described above, with a blocking pad (130) provided therebetween, thereby achieving cost reduction.

The blocking pad (130) is provided between the first frame member (110) and the second frame member (120), so that it can be expected to completely block foreign substances or heat transfer generated by thermal runaway of the battery module (10).

When a plurality of heat diffusion prevention units (100) are provided inside a battery pack (1000), the discharge path of one heat diffusion prevention unit (100) and that of another heat diffusion prevention unit (100) may be aligned, or may be misaligned with each other.

As described above, the openings (101) of the heat diffusion prevention unit (100) are formed to be positioned within a distance range based on the horizontal center of the heat diffusion prevention unit (100), and thus the openings (101) may all be aligned, or may be misaligned with each other.

If the openings (101) of the heat diffusion prevention units (100) are misaligned, even if foreign substances generated during thermal runaway of one battery module (10) flow into another battery module (10) through the opening (101), they can be blocked by the support (102) of another heat diffusion prevention unit (100) and prevented from being dispersed throughout the inside of the battery pack (1000). Additionally, it has the effect of enhancing the stability of the battery pack by preventing gas or foreign substances from concentrating in a specific region.

A battery pack according to one embodiment of the present invention may be applied to a vehicle such as an electric vehicle or a hybrid vehicle. That is, a vehicle according to the present invention may comprise a battery pack according to the present invention. In particular, in the case of vehicles such as electric vehicles, the battery pack may comprise a plurality of secondary batteries. Even if heat is generated due to thermal runaway in one of the secondary batteries, thermal propagation from the battery module (10) containing that secondary battery to surrounding battery modules (10) can be effectively blocked.

A battery pack (1000) having the above-described configuration can block or sufficiently delay thermal runaway propagation to surrounding battery modules (10) when an event such as heat generation or flame occurs in a specific battery module (10), thereby securing time required to take measures to ensure user safety and prevent secondary accidents.

Meanwhile, although terms indicating directions such as up and down are used in this specification, it is obvious to those skilled in the art that these terms are only for convenience of explanation and may vary depending on the location of the target object or the location of the observer.

While the present invention has been described with reference to the limited embodiments and the accompanying drawings, the present invention is not limited thereto, and it is to be understood that various modifications and variations can be made by those of ordinary skill in the art to which the present invention pertains within the technical spirit of the present invention and the scope of the appended claims and their equivalents.

### [REFERENCE NUMERALS]

1000: Battery Pack
10: Battery Module
11: Module Housing
20: Pack Lid
100: Heat Diffusion Prevention Unit
100a: Separation Space
101: Opening
102: Support
110: First Frame Member
111: Opening of the First Frame Member
112: Support of the First Frame Member
110a: First Horizontal Frame
110b: First Vertical Frame
110a-1, 110a-2: Uppermost First Horizontal Frames
110b-1, 110b-2: Left/Right First Vertical Frames
120: Second Frame Member
121: Opening of the Second Frame Member
122: Support of the Second Frame Member
120a: Second Horizontal Frame
120b: Second Vertical Frame
120a-1, 120a-2: Uppermost Second Horizontal Frames
120b-1, 120b-2: Left/Right Second Vertical Frames
130: Blocking Pad
131: Opening of the Blocking Pad
132: Support of the Blocking Pad

### [INDUSTRIAL APPLICABILITY]

The present invention can be used to effectively control high-temperature gases, particles, and the like generated when a thermal runaway phenomenon occurs in a battery module, and to block thermal propagation to neighboring battery modules.

## Claims

1. A battery pack, comprising:
a plurality of battery modules; and a heat diffusion prevention unit provided between adjacent battery modules, wherein
the heat diffusion prevention unit comprises:
maintains a spacing between the battery modules, blocks heat transfer, and provides a discharge path such that gas generated during thermal runaway of any one of the battery modules can be discharged upward.

2. The battery module of claim 1,
further comprising a pack lid provided on a top of the heat diffusion prevention unit,
wherein the discharge path is formed in a space between the heat diffusion prevention unit and the pack lid.

3. The battery module of claim 2, wherein
the heat diffusion prevention unit comprises an opening and a support, and wherein
a height of the opening is equal to a height of the battery module, and a height of the support is greater than the height of the opening,
the support blocks heat transfer, and gas is discharged through the opening.

4. The battery module of claim 3, wherein
the support blocks foreign substances generated during the thermal runaway of the battery module.

5. The battery module of claim 3, wherein
the support supports the pack lid, and a separation space is formed between the pack lid and the opening.

6. The battery module of claim 3, wherein
the heat diffusion prevention unit comprises:
a first frame member in contact with a side surface of one of the battery modules;
a second frame member in contact with a side surface of an adjacent one of the battery modules; and
a blocking pad provided between the first frame member and the second frame member.

7. The battery module of claim 6, wherein
the first frame member comprises
a plurality of first horizontal frames and a plurality of first vertical frames, and wherein
a support portion of the first frame member is formed by arranging the first horizontal frames and the first vertical frames in a grid, and
an opening of the first frame member is formed by arranging the first horizontal frames to be spaced apart at a predetermined interval along a vertical direction.

8. The battery module of claim 6, wherein
the second frame member comprises
a plurality of second horizontal frames and a plurality of second vertical frames, and wherein
a support portion of the second frame member is formed by arranging the second horizontal frames and the second vertical frames in a grid, and
an opening of the second frame member is formed by arranging the second horizontal frames to be spaced apart at a predetermined interval along a vertical direction.

9. The battery module of claim 6, wherein
the first frame member and the second frame member are formed of a mica material.

10. The battery module of claim 6, wherein
the blocking pad is formed of a silicone material.

11. The battery module of claim 3, wherein
when two or more of the heat diffusion prevention units are provided,
a discharge path of one of the heat diffusion prevention units and a discharge path of another of the heat diffusion prevention units are not aligned and are misaligned with each other.

12. The battery module of claim 11, wherein
the opening is located within a distance range set based on a horizontal center of the heat diffusion prevention unit.

13. A battery pack, comprising:
a plurality of battery modules; and a heat diffusion prevention unit provided between adjacent battery modules, wherein
the heat diffusion prevention unit comprises:
a first frame member in contact with a side surface of one of the battery modules;
a second frame member in contact with a side surface of an adjacent one of the battery modules; and
a blocking pad provided between the first frame member and the second frame member.

14. A vehicle, comprising a battery pack according to any one of claims 1 to 13.
